Europäisches Patentamt

European Patent Office

Office européen des brevets

(19)

(11) Veröffentlichungsnummer: **0 168 414**
**B1**

(12) **EUROPÄISCHE PATENTSCHRIFT**

(45) Veröffentlichungstag der Patentschrift:
**30.03.88**

(21) Anmeldenummer: **85900105.9**

(22) Anmeldetag: **13.12.84**

(86) Internationale Anmeldenummer:
**PCT/EP 84/00399**

(87) Internationale Veröffentlichungsnummer:
**WO 85/03060 (18.07.85** Gazette **85/16)**

(51) Int. Cl.⁴: **B 65 G 65/48,** B 65 G 53/46,
B 65 G 65/32

(54) AUSTRAGSVORRICHTUNG FÜR EINEN SCHÜTTGUT-BEHÄLTER.

(30) Priorität: **10.01.84 DE 3400595**

(43) Veröffentlichungstag der Anmeldung:
**22.01.86 Patentblatt 86/4**

(45) Bekanntmachung des Hinweises auf die Patenterteilung:
**30.03.88 Patentblatt 88/13**

(84) Benannte Vertragsstaaten:
**DE FR GB**

(56) Entgegenhaltungen:
**CH - A - 113 657**
**DE - A - 2 951 300**
**DE - C - 390 720**
**DE - C - 512 014**
**FR - A - 2 177 817**
**US - A - 3 036 745**
**US - A - 3 755 918**

(73) Patentinhaber: **Herfeld, Ute, Wall 1, D-5982 Neuenrade (DE)**

(72) Erfinder: **Herfeld, Ute, Wall 1, D-5982 Neuenrade (DE)**

(74) Vertreter: **Tetzner, Volkmar, Dr.-Ing. Dr. jur., Van-Gogh-Strasse 3, D-8000 München 71 (DE)**

**Beschreibung**

Die Erfindung betrifft eine Austragsvorrichtung für einen Schüttgut-Behälter entsprechend dem Oberbegriff des Anspruches 1.

Eine Austragsvorrichtung der im Oberbegriff des Anspruches 1 vorausgesetzten Art ist durch die DE-A-2 951 300 bekannt. Die Antriebswelle trägt hierbei eine mit der Gutdurchtrittsöffnung versehene obere Platte und eine mit der Gutaustragsöffnung versehene untere Platte. Die beiden Platten sind mit Abstand übereinander angeordnet, wobei die untere Gutaustragsöffnung umfangsmässig um etwa 180° gegenüber der oberen Gutdurchtrittsöffnung versetzt ist. Der zwischen der oberen und unteren drehbaren Platte angeordnete ringzylindrische Raum ist durch feststehende Zwischenwände in mehrere Ringsektorkammern unterteilt, wobei im Innern dieses durch eine feststehende Zylinderwand begrenzten Raumes die Antriebswelle drehbar gelagert ist. Unterhalb der mit der Gutaustragsöffnung versehenen unteren drehbaren Platte ist bei der bekannten Ausführung ein zur Seite hin abgekröpfter Auslassstutzen vorgesehen, durch den die Antriebswelle hindurchgeführt ist.

Eine derartige Austragsvorrichtung ist mit verschiedenen Nachteilen behaftet. Ungünstig ist vor allem der beträchtliche Querschnitt der Austragsvorrichtung, der durch die Anordnung der die beiden drehbaren Platten tragenden Antriebswelle im Innern der vom Schüttgut durchsetzten Räume bedingt ist. Die bei der bekannten Ausführung vorgesehene Ausbildung und Anordnung der Welle führt ferner zu einer seitlich versetzten Gestaltung des Anschlussstutzens, was die Baubreite weiter vergrössert, den Anschluss an nachgeschaltete Aggregate vielfach erschwert und durch die notwendige Umlenkung des Gutes leicht zu Verstopfungen und Brückenbildungen führt. Zur Vermeidung dieser letzteren Nachteile ist bei der bekannten Ausführung im Bereich des Auslassstutzens ein drehfest mit der Antriebswelle verbundenes Austragsorgan vorgesehen.

Ein weiterer wesentlicher Nachteil dieser bekannten Ausführung ist ferner die beträchtliche Bauhöhe, die durch die notwendigerweise vertikal mit Abstand übereinander vorgesehene Anordnung der beiden drehbaren Platten und des rotierenden Austragsorganes bedingt ist. Aufgrund der beträchtlichen Baubreite und Bauhöhe der bekannten Ausführung gestaltet sich die Wartung, insbesondere die laufende Reinigung, recht aufwendig.

Es ist ferner eine Austragsvorrichtung bekannt (DE-C-390 720), bei der der Boden des Behälters eine Kreisrinne von dreieckförmigem Querschnitt ist, die von einem festen Schenkel und einem mit einer Guteintrittsöffnung versehenen drehbaren Schenkel begrenzt wird. Darunter befindet sich eine ähnliche Rinne, deren drehbarer Schenkel sich nur über einen Teil des Kreisbogens erstreckt und den übrigen Teil des Kreisbogens zum Austritt des Gutes freilässt. Da hierbei die untere Rinne nicht durch feststehende Zwischenwände in mehrere Kammern unterteilt werden kann, besteht eine offene Verbindung zwischen der Gutdurchtrittsöffnung und der Gutaustragsöffnung.

Zum Stand der Technik gehört weiterhin eine Austragsvorrichtung (DE-C-512 014), bei der ein durch radiale Zwischenwände in mehreren Kammern unterteilter ringförmiger, drehbarer Behälter vorgesehen ist, der an einer Stelle seines äusseren Umfanges üner eine Gutdurchtrittsöffnung mit Gut beschickt wird und der das Gut an einer anderen Stelle seines inneren Umfanges über eine Gutautragsöffnung in eine zentrale Schurre überführt. Bei einer derartigen Austragsvorrichtung muss das gesamte Material durch den drehbaren Behälter von der Gutdurchtrittsöffnung zur Gutaustragsöffnung gefördert werden, was eine entsprechend stabile Konstruktion des drehbaren Behälters bedingt.

Schliesslich ist eine Austragsvorrichtung bekannt (US-A-3 036 745), bei der eine hohl ausgebildete Antriebswelle im Bodenbereich des Behälters mit der Welle umlaufende Flügel trägt und in ihrem Umfang zwei Gutdurchtrittsöffnungen aufweist, durch die das von den Flügeln erfasste Gut dem Innenraum der Welle zugeführt wird.

Der Erfindung liegt die Aufgabe zugrunde, eine Austragsvorrichtung der im Oberbegriff des Anspruches 1 vorausgesetzten Art so auszubilden, dass die Bauhöhe und Baubreite wesentlich verkleinert wird, ein axialer Anschluss nachgeschalteter Aggregate möglich ist und eine glatte, nicht der Gefahr einer Brückenbildung ausgesetzte Strömungsbewegung des Gutes durch die Austragsvorrichtung gewährleistet ist.

Diese Aufgabe wird erfindungsgemäss durch die kennzeichnenden Merkmale des Anspruches 1 gelöst.

Indem bei der erfindungsgemässen Austragsvorrichtung die Gutaustragsöffnung in der Umfangswand der hohl ausgebildeten Antriebswelle vorgesehen ist, entfällt die Notwendigkeit der Anordnung einer mit der Gutaustragsöffnung versehenen gesonderten Platte. Da das Gut durch die hohl ausgebildete Antriebswelle nach unten ausgetragen wird, ergibt sich nicht nur die Möglichkeit eines axialen Anschlusses nachgeschalteter Aggregate, sondern es wird vor allem eine glatte, von Hindernissen und Umlenkungen freie Strömungsbewegung des Gutes in der Austragsvorrichtung erzielt. So entfällt insbesondere die Notwendigkeit, auf der Auslassseite der Gutaustragsvorrichtung noch ein rotierendes Förderorgan vorzusehen. Bauhöhe und Baubreite werden auf diese Weise wesentlich verkleinert und der bauliche Aufwand für die Austragsvorrichtung erheblich verringert.

Da das Gut bei der erfindungsgemässen Austragsvorrichtung ausschliesslich durch reine Schwerkraftwirkung, ohne Verwendung zusätzlicher Förderorgane, ausgetragen wird, gestaltet sich aus die Wartung und Reinigung der Vorrichtung sehr einfach.

Da der die Antriebswelle ringförmig umgebende Raum durch eine trichterförmigen Aussenwand begrenzt ist, wird die Förderung des Gutes zur zentral angeordneten, hohlen Antriebswelle erleichtert und einer Brückenbildung entgegengewirkt.

Zugleich ergibt sich durch diese Gestaltung die Möglichkeit, die erfindungsgemässe Austragsvorrichtung als eine Baueinheit auszubilden, die nur zeitweise bzw. im Bedarfsfall an einen Schüttgutbehälter mit konischem Boden angebaut wird.

Die erfindungsgemässe Austragsvorrichtung lässt sich besonders vorteilhaft auch bei einem pneumatischen Mischsilo einsetzen, wobei die drehbare Platter eine zentrale Öffnung aufweist, über die die hohl ausgebildete Antriebswelle mit einem im Schüttgut-Behälter angeordneten Gutsteigrohr in Verbindung steht. Wird hierbei an das untere Ende der hohl ausgebildeten Antriebswelle eine Leitung zur Zuführung eines Luftstromes für den Mischvorgang angeschlossen, so wird das durch die Gutaustragsöffnung der Austragsvorrichtung in die hohl ausgebildete Antriebswelle gelangende Gut von der Mischluft über das Gutsteigrohr erneut in den Innenraum des Mischsilos zurückgeführt, was nach einigen derartigen Umläufen zu einer guten Misch- und Homogenisierwirkung führt.

Diese und weitere zweckmässige Ausgestaltungen der Erfindung sind Gegenstand der Unteransprüche und werden im Zusammenhang mit der Beschreibung einiger in der Zeichnung veranschaulichter Ausführungsbeispiele näher erläutert.

In der Zeichnung zeigen:

Fig. 1 einen vertikalen Schnitt durch ein erstes Ausführungsbeispiel der erfindungsgemässen Austragsvorrichtung,

Fig. 2 eine Ansicht der Austragsvorrichtung der Fig. 1 in Richtung der Pfeiles x,

Fig. 3 eine Seitenansicht eines als pneumatisches Mischsilo ausgebildeten Schüttgut-Behälters mit der erfindungsgemässen Austragsvorrichtung,

Fig. 4 einen vertikalen Schnitt durch die Austragsvorrichtung des Schüttgut-Behälters gemäss Fig. 3,

Fig. 5 eine Ansicht (entsprechend Fig. 2) eines abgewandelten Ausführungsbeispieles der Austragsvorrichtung.

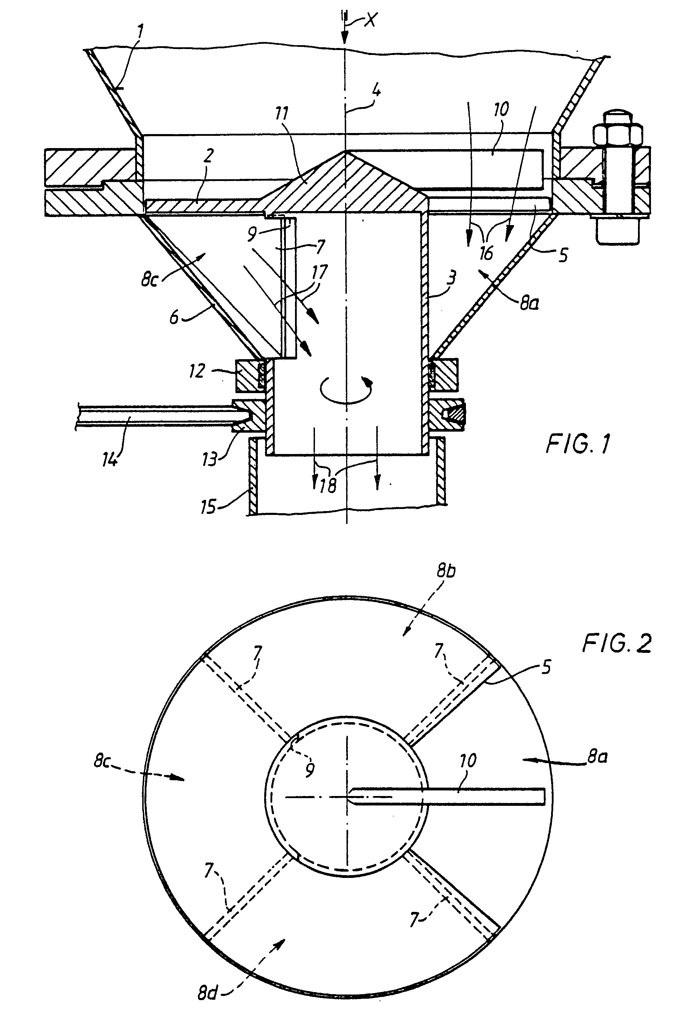

Bei dem in Fig. 1 und 2 dargestellten Ausführungsbeispiel ist die dargestellte Austragsvorrichtung zur Entleerung eines (nicht im einzelnen veranschaulichten) Behälters 1 mit konischem Boden (beispielsweise eines Aufgabetrichters) bestimmt.

Im Bodenbereich dieses Behälters 1 ist eine Platte 2 vorgesehen, die drehfest mit einer Antriebswelle 3 verbunden ist. Durch diese Antriebswelle 3 ist die Platte 2 um eine vertikale Achse 4 drehbar. Die Platter 2 ist mit einer aussermittig angeordneten Gutdurchtrittsöffnung 5 versehen, die ringsektorförmig gestaltet ist.

Unterhalb der drehbaren Platte 2 befindet sich ein Raum, der nach oben hin durch die drehbare Platte 2 — bis auf die Gutdurchtrittsöffnung 5 — abgedeckt ist und der nach aussen hin durch eine trichterförmige Aussenwand 6 begrenzt ist. Dieser Raum wird beim dargestellten Ausführungsbeispiel durch vier in gleichmässiger Umfangsteilung angeordnete Zwischenwände 7 in vier sektorförmige Kammern 8a bis 8d unterteilt.

Die Antriebswelle 3 ist hohl ausgebildet und enthält in ihrer Umfangswand eine Gutaustragsöffnung 9, deren Höhe sich über die gesamte Höhe des durch die trichterförmige Aussenwand 6 begrenzten Raumes erstreckt. Die Gutaustragsöffnung 9 ist um 180° gegenüber der in der Platte 2 vorgesehen Gutdurchtrittsöffnung 5 versetzt. Dabei ist der Umfangswinkel der sektorförmigen Durchtrittsöffnung 5 etwas kleiner als der Umfangswinkel der einzelnen Kammern 8a bis 8d (vgl. Fig. 2). Der Umfangswinkel der in der Antriebswelle 3 vorgesehenen Gutaustragsöffnung 9 ist nur wenig grösser als der Umfangswinkel der Kammern 8a bis 8d (vgl. Fig. 2).

Oberhalb der in der Platte 2 vorgesehenen Gutdurchtrittsöffnung ist ein drehfest mit der Antriebswelle 3 verbundenes Auflockerungselement 10 vorgesehen. Die Antriebswelle 3 wird nach oben durch einen Konus 11 abgeschlossen.

Im Bereich unterhalb der trichterförmigen Aussenwand 6 ist die Antriebswelle 3 in einem von der Aussenwand 6 getragenen Lager 12 gelagert. Unterhalb dieses Lagers 12 sitzt auf der Welle 3 eine Antriebsscheibe 13, die über einen Keilriemen 14 angetrieben wird. Es versteht sich jedoch, dass im Rahmen der Erfindung auch andere Möglichkeiten zum Antrieb der Welle 3 bestehen.

Koaxial an die hohl ausgebildete Antriebswelle 3 schliesst sich bei dem dargestellten Ausführungsbeispiel ein Austragsstutzen 15 an.

Die Funktion der erfindungsgemässen Austragsvorrichtung ist damit wie folgt:

Aus dem Behälter 1 gelangt das Gut in Richtung der Pfeile 16 durch die in der Platte 2 vorgesehene Gutdurchtrittsöffnung 5 jeweils in die nach oben hin gerade offene Kammer (in der in der Zeichnung dargestellten Drehstellung somit in die Kammer 8a). Aus der gegenüberliegenden Kammer (in der Lage gemäss Zeichnung somit aus der Kammer 8c) fliesst gleichzeitig Gut in Richtung der Pfeile 17 durch die in der Umfangswand der Antriebswelle 3 vorgesehene Gutaustragsöffnung 9 in die hohle Antriebswelle 3 und von hier in Richtung der Pfeile 18 in den Austragsstutzen 15. Durch die Drehbewegung der Antriebswelle 3 und der Platte 2 rotieren nun sowohl die Gutdurchtrittsöffnung 5 als auch die Gutaustragsöffnung 9, so dass die einzelnen Kammern 8a bis 8d des von der trichterförmigen Aussenwand 6 umschlossenen Raumes nacheinander jeweils gefüllt und entleert werden. Der Innenraum des Behälters 1 ist auf diese Weise ständig gegenüber dem Austragsstutzen 15 dicht abgeschlossen, so dass die Austragsvorrichtung eine zuverlässige Schleusenwirkung besitzt.

Die erfindungsgemässe Austragsvorrichtung ist für Schüttgut-Behälter verschiedenster Art geeignet. Während beim dargestellten Ausführungsbeispiel ein Aufgabetrichter mit konischem Boden angenommen wurde, kann die erfindungsgemässe Austragsvorrichtung statt dessen beispielsweise auch bei einem Misch- oder Dosierbehälter eingesetzt werden.

Ein besonderer Vorteil der erfindungsgemässen Lösung besteht dabei in der Möglichkeit, die Austragsvorrichtung nur zeitweise bzw. im Bedarfsfalle an einen Schüttgut-Behälter mit konischem Boden anzubauen. In diesem Falle kann somit die trichterförmige Aussenwand 6 den eigentlichen konischen Boden des betreffenden Schüttgut-Behälters (bzw. des untersten Teiles hiervon) bilden. Der Anbau der erfindungsgemässen Austragsvorrichtung an einen solchen Schüttgut-Behälter erfolgt dann in der Weise, dass die Zwischenwände 7 von oben in den konischen Boden des Schüttgut-Behälters eingesetzt werden, ebenso die Antriebswelle 3 mit der von ihr getragenen Platte 2. Die Antriebsvorrichtung ist hierbei zweckmässig so ausgestaltet, dass der untere Teil der Antriebswelle 3 in geeignete Mitnehmer der Antriebsvorrichtung eingreift. Auf diese Weise braucht der Schüttgut-Behälter lediglich auf die Austragsvorrichtung aufgesetzt zu werden und kann dann dosiert entleert werden.

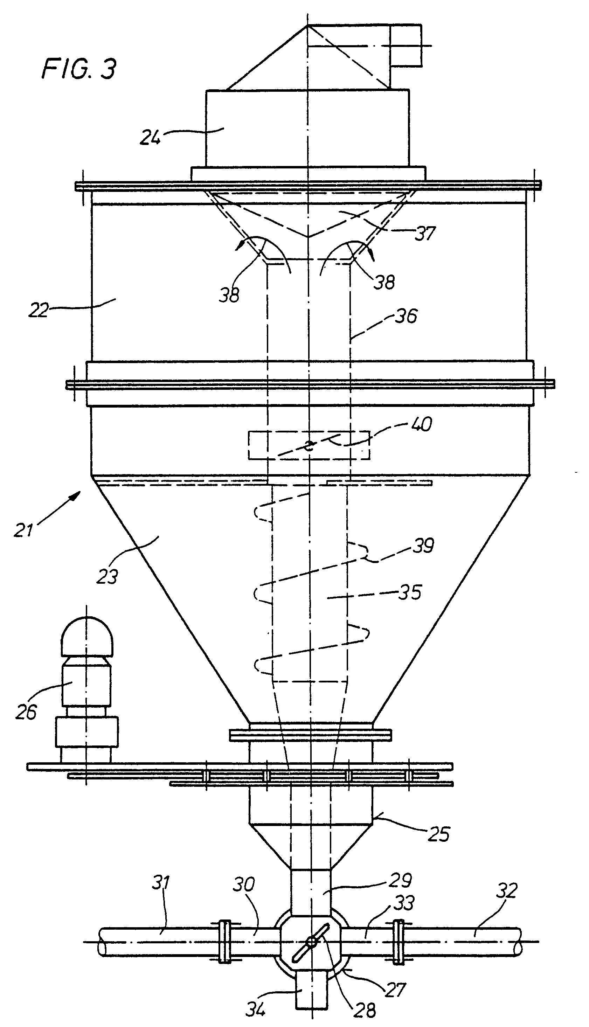

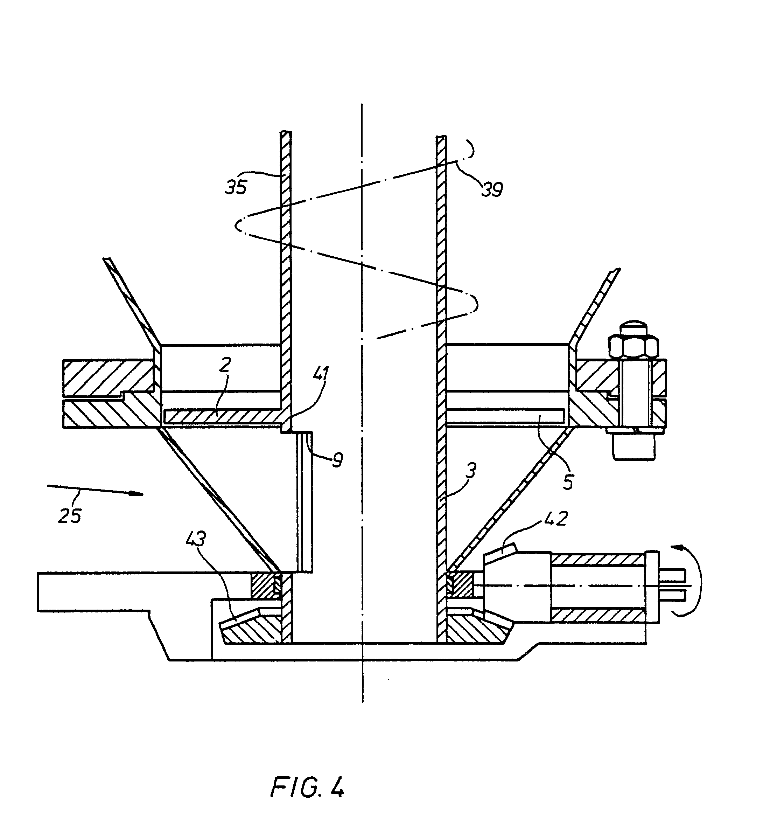

Die Fig. 3 und 4 veranschaulichen ein weiteres Ausführungsbeispiel der Erfindung, bei dem die erfindungsgemässe Austragsvorrichtung Teil eines als pneumatisches Mischsilo ausgebildeten Schüttgut-Behälters ist.

Das Mischsilo 21 enthält einen zylindrischen oberen Teil 22 und einen als Trichter ausgebildeten unteren Teil 23. Der obere Teil 22 trägt einen Filter 24. Der untere Teil 23 ist mit einer Austragsvorrichtung 25 versehen, deren Einzelheiten anhand von Fig. 4 im einzelnen erläutert werden. Die Austragsvorrichtung 25 ist mit einem Antriebsmotor 26 versehen.

Unterhalb der Austragsvorrichtung 25 schliesst sich eine Rohrweiche 27 an, die eine verstellbare Klappe 28 enthält. Ein Stutzen 29 der Rohrweiche 27 ist mit der Austragsvorrichtung 25 verbunden. An einen weiteren Stutzen 30 schliesst sich eine Leitung 31 an, die zur Zuführung eines Luftstromes für den Mischvorgang bzw. eines Förderluftstromes dient. Eine Gutförderleitung 32 ist mit einem weiteren Stutzen 33 der Rohrweiche 27 verbunden. Schliesslich ist noch ein Entleerungsstutzen 34 vorgesehen.

Im Innern des Mischsilos 21 ist ein Gutsteigrohr angeordnet, dass aus einem mit der Antriebswelle der Austragsvorrichtung 25 drehfest verbundenen unteren Teil 35 und aus einem feststehend im Mischsilo 21 angeordneten oberen Teil 36 besteht. Über dem oberen Ende des Teiles 36 ist ein Verteilerkegel 37 angeordnet, durch den das im Gutsteigrohr hochgeförderte Gut radial in den Innenraum des Mischsilos 21 abgeworfen wird. (Pfeile 38).

Der mit der Antriebswelle drehfest verbundene untere Teil 35 des Gutsteigrohres trägt an seinem äusseren Umfang eine Förderwendel 39. Der feststehend im Mischsilo 21 angeordnete obere Teil 36 des Gutsteigrohres ist mit einem Absperrschieber 40 versehen, der mittels einer nicht veranschaulichten Betätigungseinrichtung von aussen zwischen einer Absperr- und Öffnungsstellung verstellbar ist.

Fig. 4 zeigt die Ausbildung der Austragsvorrichtung 25 im einzelnen. Diese Austragsvorrichtung entspricht im Prinzip dem anhand der Fig. 1 und 2 bereits erläuterten Ausführungsbeispiel, so dass für gleiche Elemente dieselben Bezugszeichen verwendet sind.

Im Unterschied zu dem Ausführungsbeispiel gemäss Fig. 1 und 2 ist jedoch bei der Anordnung gemäss Fig. 4 die drehbare Platte 2 mit einer zentralen Öffnung 41 versehen, über die die hohl ausgebildete Antriebswelle 3 mit dem im Mischsilo 21 angeordneten Gutsteigrohr (und zwar dem unteren Teil 35 dieses Gutsteigrohres) in Verbindung steht. Die Antriebswelle 3 der drehbaren Platte 2 und der untere Teil 35 des Gutsteigrohres können — wie in Fig. 4 angenommen — auch einstückig ausgebildet sein.

Der Drehantrieb der Welle 3 erfolgt bei dem Ausführungsbeispiel gemäss den Fig. 3 und 4 vom Antriebsmotor 26 über ein Ritzel 42 und einen Zahnkranz 43.

Die Funktion der in den Fig. 3 und 4 dargestellten Vorrichtung ist wie folgt:

Soll im Mischsilo 21 ein Misch- und Homogenisiervorgang erfolgen, so wird durch die Rohrweiche 27 die für den Mischvorgang benötigte Luft von der Leitung 31 über den Stutzen 29 der hohl ausgebildeten Antriebswelle 3 und dem Gutsteigrohr (Teile 35, 36) zugeführt. Die als Schleuse wirkende Austragsvorrichtung 25 verhindert hierbei, dass die Luft unter Umgehung des Gusteigrohres in den Innenraum des Mischsilos gelangt. Das von der Austragsvorrichtung 25 durch die Gutaustragsöffnung 9 in den Innenraum der Antriebswelle 3 geförderte Gut wird vom Luftstrom erfasst und über das Gusteigrohr 35, 36 in den Innenraum des Mischsilos 21 zurückgeführt (der Absperrschieber 40 ist hierbei geöffnet). Die für den Mischvorgang verwendete Luft kann entweder (wie bei dem dargestellten Ausführungsbeispiel) über das Filter 24 abgezogen werden oder sie kann — wenn mit Umluft gearbeitet wird — über einen Ventilator wieder der Leitung 31 zugeführt werden.

Dieser pneumatische Misch- und Homogeniservorgang wird noch dadurch unterstützt, dass die mit der Antriebswelle 3 rotierende Förderwendel 39 das Gut im Innenbereich des trichterförmigen unteren Teiles 23 des Mischsilos 21 auflockert und nach oben bewegt. Hierdurch ergibt sich eine Gegenstrombewegung zu dem im äusseren Bereich des trichterförmigen unteren Teiles 23 absinkenden Gut. Zugleich wird das Gut oberhalb der rotierenden Platte 2 und der aussermittig in dieser Platte 2 angeordneten Gutdurchtrittsöffnung 5 aufgelockert.

Soll das Mischsilo 21 entleert werden, so wird der Absperrschieber 40 geschlossen, so dass die über die Leitung 31 zugeführte Luft nicht durch das Gutsteigrohr strömen kann. Die Rohrweiche 27 wird so eingestellt, dass die die Förderluft zuführende Leitung 31 in Verbindung mit der Gutförderleitung 32 steht. Durch die Austragsvorrichtung 25 wird nun in der bereits anhand der Fig. 1 und 2 erläuterten Weise Gut aus dem Mischsilo 21 in die Förderleitung 32 dosiert eingeführt und pneumatisch weitergefördert.

Die Leitung 31, die beim Mischvorgang zur Zuführung eines Mischluftstromes dient und über die bei der Entleerung des Mischsilos der das Gut transportierende Förderluftstrom zugeführt wird, kann zugleich zum Füllen des Mischsilos mit Gut (über einen pneumatischen Transportluftstrom) verwendet werden.

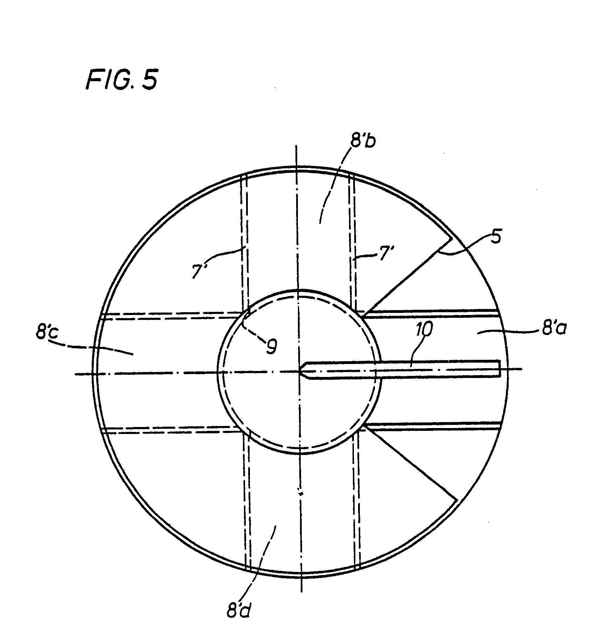

Bei dem in Fig. 5 dargestellten abgewandelten Ausführungsbeispiel der erfindungsgemässen Austragsvorrichtung ist der die Antriebswelle 3 ringförmig umgebende Raum durch parallel zueinander angeordnete Zwischenwände 7' in Kammern 8'a, 8'b, 8'c, 8'd unterteilt, die von der Aussenwand 6 dieses Raumes bis zur Gutaustrittsöffnung 9 eine gleichbleibende Breite aufweisen. Eine solche Ausführung ist vor allem für Gut mit verminderter Rieselfähigkeit günstig, da hierbei die Kammern 8'a bis 8'd in Fliessrichtung des Gutes keine Querschnittsverringerung aufweisen. Der zwischen benachbarten Kammern 8'a bis 8'd vorhandene, sektorförmige Raum ist bei diesem Ausführungsbeispiel nach oben hin zweckmässig durch eine Platte abgedeckt.

**Patentansprüche**

1. Austragsvorrichtung für einen Schüttgut-Behälter, enthaltend
a) eine im Bodenbereich des Behälters (1) vorgesehene Platte (2), die um eine vertikale Achse (4) drehbar ist und wenigstens eine aussermittig angeordnete Gutdurchtrittsöffnung (5) aufweist,
b) eine Antriebswelle (3) zum Drehantrieb der Platte (2),
c) einen die Antriebswelle (3) ringförmig umgebenden Raum, der nach oben hin durch die drehbare Platte (2) bis auf die Gutdurchtrittsöffnung (5) abgedeckt und durch feststehende Zwischenwände (7) in mehrere Kammern (8a bis 8d) unterteilt ist,
d) wenigstens eine synchron mit der Platte (2) drehbare Gutaustragsöffnung (9), die gegenüber der Gutdurchtrittsöffnung (5) umfangsmässig derart versetzt angeordnet ist, dass sie den Gutaustrag jeweils aus einer durch die Platte gerade abgedeckten Kammer freigibt,
gekennzeichnet durch folgende Merkmale:
e) der die Antriebswelle (3) ringförmig umgebende Raum ist durch eine trichterförmige Aussenwand begrenzt;
f) die Antriebswelle (3) ist hohl ausgebildet;
g) die Gutaustragsöffnung (9) ist in der Umfangswand der Antriebswelle (3) vorgesehen und hat eine Höhe, die sich über die gesamte Höhe des durch die trichterförmige Aussenwand (6) begrenzten Raumes erstreckt.

2. Austragsvorrichtung nach Anspruch 1, dadurch gekennzeichnet, dass der die Antriebswelle (3) ringförmig umgebende Raum durch in gleichmässiger Umfangsteilung angeordnete Zwischenwände (7) in wenigstens vier sektorförmige Kammern (8a bis 8d) unterteilt ist.

3. Austragsvorrichtung nach Anspruch 2, dadurch gekennzeichnet, dass der Umfangswinkel der in der drehbaren Platte (2) vorgesehenen sektorförmigen Gutdurchtrittsöffnung (5) höchstens gleich dem Umfangswinkel einer Kammer (8a bis 8d) ist.

4. Austragsvorrichtung nach Anspruch 2, dadurch gekennzeichnet, dass der Umfangswinkel der in der Umfangswand der Antriebswelle (3) vorgesehenen Gutaustragsöffnung (8) annähernd gleich dem oder nur wenig grösser als der Umfangswinkel einer Kammer (8a bis 8d) ist.

5. Austragsvorrichtung nach Anspruch 1, dadurch gekennzeichnet, dass oberhalb der Gutdurchtrittsöffnung (5) ein drehfest mit der Antriebswelle (3) verbundenes Auflockerungselement (10) angeordnet ist.

6. Austragsvorrichtung nach Anspruch 1, dadurch gekennzeichnet, dass die Antriebswelle (3) im Bereich unterhalb des durch die trichterförmige Aussenwand (6) begrenzten Raumes drehbar gelagert und mit einer Antriebseinrichtung (13, 14) verbunden ist.

7. Austragsvorrichtung nach Anspruch 1, gekennzeichnet, durch ihre Ausgestaltung als eine an einen Schüttgut-Behälter mit konischem Boden anbaubare Baueinheit.

8. Austragsvorrichtung nach Anspruch 1 für einen als pneumatisches Mischsilo alsgebildeten Schüttgut-Behälter,
gekennzeichnet durch folgende Merkmale:
h) Die drehbare Platte (2) weist eine zentrale Öffnung (41) auf, über die die hohl ausgebildete Antriebswelle (3) mit einem im Schüttgut-Behälter (21) angeordneten Gutsteigrohr (35, 36) in Verbindung steht;
i) mit dem unteren Ende der hohl ausgebildeten Antriebswelle (3) ist wahlweise eine Leitung (31) zur Zuführung eines Luftstromes für den Mischvorgang oder eine Gutförderleitung (32) verbindbar.

9. Austragsvorrichtung nach Anspruch 8, gekennzeichnet durch folgende weitere Merkmale:
j) Das untere Ende der hohl ausgebildeten Antriebswelle (3) ist an eine Rohrweiche (27) angeschlossen, die ausserdem einen Anschluss (30) für eine Leitung (31) zur Zuführung eines Misch- oder Förderluftstromes sowie einen Anschluss (33) für eine das aus dem Mischsilo (21) ausgetragene Gut pneumatisch weitertransportierende Gutförderleitung (32) aufweist;
k) das Gutsteigrohr (35, 36) ist mit einem Absperrschieber (40) versehen.

10. Austragsvorrichtung nach Anspruch 8, dadurch gekennzeichnet, dass das Gusteigrohr (35, 36) aus einem mit der Antriebswelle (3) drehfest verbundenen bzw. einstückig ausgebildeten, am äusseren Umfang mit einer Förderwendel (39) versehenen unteren Teil (35) und einem feststehend im Schüttgut-Behälter (21) angeordneten oberen Teil (36) besteht.

11. Austragsvorrichtung nach Anspruch 8, dadurch gekennzeichnet, dass die Leitung (31) zur Zuführung eines Luftstromes für den Mischvorgang zugleich zum Füllen des Mischsilos (21) mit Gut dient.

12. Austragsvorrichtung nach Anspruch 1, dadurch gekennzeichnet, dass der die Antriebswelle (3) ringförmig umgebende Raum durch parallel zueinander angeordnete Zwischenwände (7') in Kammern (8'a bis 8'd) unterteilt ist, die von der Aussenwand (6) dieses Raumes bis zur Gutaustragsöffnung (9) eine gleichbleibende Breite aufweisen.

**Claims**

1. Dispensing device for a bulk material container, containing
a) a plate (2) which is provided in the base region of the container (1), is rotatable about a vertical axis and has at least one eccentrically arranged material opening (5),
b) a drive shaft (3) for rotary driving of the plate (2),
c) an annular space which surrounds the drive shaft (3), is covered at the top by the rotatable plate (2) as far as the material opening (5) and is divided into a plurality of chambers (8a to 8d) by fixed partitions (7),
d) at least one material discharge opening (9) which is rotatable synchronously with the plate (2), is arranged offset with respect to the material opening (5) in such a way that it frees the material discharge in each case from one chamber which has just been covered by the plate,
characterised by the following features:

e) the annular space surrounding the drive shaft (3) is defined by a funnel-shaped external wall:

f) the drive shaft (3) is of hollow construction;

g) the material discharge opening (9) is provided in the peripheral wall of the drive shaft (3) and its height is such that it extends over the total height of the space defined by the funnel-shaped external wall (6).

2. Dispensing device as claimed in claim 1, characterised in that the annular space surrounding the drive shaft (3) is divided into at least four sector-shaped chambers (8a to 8b) by partitions (7) which are evenly distributed over its periphery.

3. Dispensing device as claimed in claim 2, characterised in that the pheripheral angle of the sector-shaped material opening (5) provided in the rotatable plate (2) is at most equal to the peripheral angle of one chamber (8a to 8d).

4. Dispensing device as claimed in claim 2, characterised in that the peripheral angle of the material discharge opening (9) provided in the peripheral wall of the drive shaft (3) is approximately equal to or only slightly greater than the peripheral angle of one chamber (8a to 8d).

5. Dispensing device as claimed in claim 1, characterised in that an aerating element (10) which is connected to the drive shaft (3) so as to be fixed against rotation is arranged above the material opening (5).

6. Dispensing device as claimed in claim 1, characterised in that the drive shaft (3) is rotatably mounted in the region below the space defined by the funnel-shaped external wall (6) and is connected to a drive arrangement (13, 14).

7. Dispensing device as claimed in claim 1, characterised by its construction as a unit which can be fitted to a bulk material container with a conical base.

8. Dispensing device as claimed in claim 1 for a bulk material container constructed as a pneumatic mixing silo, characterised by the following features:

h) the rotatable plate (2) has a central opening (41) by means of which the hollow drive shaft (3) is connected to a material uptake (35, 36) arranged in the bulk material container (21);

i) a pipe (31) for delivery of an air stream for the mixing process or a material conveying pipe (32) as required can be connected to the lower end of the hollow drive shaft (3).

9. Dispensing device as claimed in claim 8, characterised by the following further features;

j) the lower end of the hollow drive shaft (3) is connected to a pipe junction (27) which in also has a connection (30) for a pipe (31) for delivery of a mixing or conveying air stream and a connection (33) for a material conveying pipe (32) for further conveying by pneumatic means of the material discharged from the mixing silo (21);

k) the material uptake (35, 36) is provided with a gate-type shut-off valve (40).

10. Dispensing device as claimed in claim 8, characterised in that the material uptake (35, 36) consists of a lower part (35) which is connected to the drive shaft (3) so as to be fixed against rotation or is constructed in one piece with the drive shaft and is provided with a conveying coil (39) on the outer periphery, and an upper part (36) which is arranged fixed in the bulk material container (21).

11. Dispensing device as claimed in claim 8, characterised in that the pipe (31) for delivery of an air stream for the mixing process serves at the same time for filling the mixing silo (21) with material.

12. Dispensing device as claimed in claim 1, characterised in that the annular space surrounding the drive shaft (3) is divided by partitions (7') which are arranged parallel to one another into chambers (8'a to 8'd) which have a constant width from the external wall (6) of this space to the material discharge opening (9).

**Revendications**

1. Dispositif de distribution pour container de matériau pulvérulent ou de matériau en vrac, comprenant:

a) une plaque (2) prévue dans le fond du container (1) qui est rotative autour d'un axe vertical (4) et comporte au moins une lumière excentrée (5) de passage du matériau,

b) un arbre (3) de commande de la rotation de la plaque (2),

c) une chambre qui entoure en anneau l'arbre de commande (3), dont le haut est recouvert par la plaque rotative (2) à l'exception de la lumière de passage (5) et que des cloisons intermédiaires fixes (7) subdivisent en plusieurs compartiments (8a à 8d),

d) au moins une lumière (97 de déversement du matériau qui est rotative en synchronisme avec la plaque (2) et qui est décalée à la circonférence par rapport à la lumière de passage (5) de manière à libérer la décharge du matériau d'un compartiment qui est à ce moment recouvert par la plaque,
caractérisé par les particularités suivantes:

e) la chambre entourant en anneau l'arbre de commande (3) est délimitée par une paroi extérieure en forme de trémie;

f) l'arbre se commande (3) est creux;

g) la lumière de déversement du matériau (9) est prévue dans la paroi circonférentielle de l'arbre de commande (3) et sa hauteur se prolonge sur la totalité de celle de la chambre délimitée par la paroi extérieure (6) en forme de trémie.

2. Dispositif de distribution selon la revendication 1, caractérisé en ce que des cloisons intermédiaires (7) réparties régulièrement à la circonférence subdivisent la chambre entourant en anneau l'arbre de commande (3) en au moins quatre compartiments (8a à 8d) en forme de secteurs.

3. Dispositif de distribution selon la revendication 2, caractérisé en ce que l'angle inscrit par la lumière de passage (5) en forme de secteur, qui est prévue dans la plaque rotative (2), est au maximum égal à l'angle inscrit par un compartiment (8a à 8d).

4. Dispositif de distribution selon la revendication 2, charactérisé en ce que l'angle inscrit par la lumière de déversement (9) prévue dans la paroi circonférentielle de l'arbre de commande (3) est approximativement égal ou n'est que faible inférieur à l'angle inscrit par un compartiment (8a à 8d).

5. Dispositif de distribution selon la revendication 4, caractérisé en ce qu'un organe de désagrégation (10) solidarisé en rotation avec l'arbre de commande (3) est disposé au-dessus de la lumière de passage (5).

6. Dispositif de distribution selon la revendication 1, caractérisé en ce que le palier de montage rotatif de l'arbre de commande (3) est placé sous la chambre délimitée par la paroi extérieure (6) en forme de trémie, cet arbre étant relié à un dispositif d'entraînement (13, 14).

7. Dispositif de distribution selon la revendication 1, caractérisé par sa conformation en un module capable d'être rapporté à un container de matériau en vrac à fond conique.

8. Dispositif de distribution slon la revendication 1, destiné à un container de matériau en vrac conformé en silo mélangeur pneumatique,
caractérisé par les particularités suivantes:

h) la plaque rotative (2) comporte une ouverture centrale (41) par laquelle l'arbre de commande creux (3) communique avec une conduite montante (35, 36) disposée dans le container de matériau en vrac (21);

i) une canalisation (31) d'arrivée d'un courant d'air de mélange ou une canalisation (32) de transport du matériau est raccordable sélectivement à l'extrémité inférieure de l'arbre de commande creux (3).

9. Dispositif de distribution selon la revendication 8, caractérisé par les autres particularités suivantes:

j) l'extrémité inférieure de l'arbre de commande creux (3) est raccordée à un sélecteur de tuyau (27) qui comprend par ailleurs un raccord (30) à une canalisation (31) d'arrivée d'un courant d'air mélangeur ou d'air de transport ainsi qu'un raccord (33) à une canalisation (32) assurant la suite du transport pneumatique du matériau déchargé du silo mélangeur (21);

k) la conduite montante (35, 36) est équipée d'une vanne d'arrêt (40).

10. Dispositif de distribution selon la revendication 8, caractérisé en ce que la conduite montante (35, 36) par laquelle passe le matériau se compose d'une partie inférieure (35) solidarisée en rotation ou réalisée en une seule pièce avec l'arbre de commande (3) et dont la circonférence extérieure est équipée d'un transporteur hélicoïdal (39), ainsi que d'une partie supérieure (36) montée fixe à l'intérieur du container (21) de matériau en vrac.

11. Dispositif de distribution selon la revendication 8, caractérisé en ce que la canalisation (31) d'arrivée d'un courant d'air destiné au mélange est également utilisable pour remplir de matériau le silo mélangeur (21).

12. Dispositif de distribution selon la revendication 1, caractérisé en ce que la chambre entourant en anneau l'arbre de commande (3) est subdivisée par des cloisons intermédiaires parallèles (7') en compartiments (8'a à 8'd) qui ont une largeur constante de la paroi extérieure (6) de cette chambre jusqu'à la lumière (9) de déversement du matériau.

0 168 414

FIG. 1

FIG. 2

9

FIG. 3

FIG. 4

FIG. 5